Europäisches Patentamt

European Patent Office

Office européen des brevets

(19)

(11) Numéro de publication : **0 307 263 B1**

(12) **FASCICULE DE BREVET EUROPEEN**

(45) Date de publication du fascicule du brevet :
**18.12.91 Bulletin 91/51**

(51) Int. Cl.⁵ : **B60G 11/26, B60G 3/00**

(21) Numéro de dépôt : **88402055.3**

(22) Date de dépôt : **05.08.88**

(54) **Elément de suspension hydropneumatique pour véhicule à roues, notamment tout terrain.**

(30) Priorité : **10.09.87 FR 8712567**

(43) Date de publication de la demande :
**15.03.89 Bulletin 89/11**

(45) Mention de la délivrance du brevet :
**18.12.91 Bulletin 91/51**

(84) Etats contractants désignés :
**CH DE GB IT LI**

(56) Documents cités :
**DE-A- 1 555 004**
**DE-A- 2 629 518**
**FR-A- 2 582 997**
**GB-A- 15 983**
**GB-A- 480 467**

(73) Titulaire : **S.A.M.M.- Société d'Applications
des Machines Motrices
Chemin de la Malmaison
F-91570 Bièvres (FR)**

(72) Inventeur : **Joseph, Philippe
Quartier Begay Loriol du Combat
F-84200 Carpentras (FR)**
Inventeur : **Perrochat, Jean-Michel
103, avenue Verdier
F-92120 Montrouge (FR)**

(74) Mandataire : **Martin, Jean-Paul et al
c/o CABINET LAVOIX 2, Place d'Estienne
d'Orves
F-75441 Paris Cedex 09 (FR)**

## Description

La présente invention a pour objet un élément de suspension hydropneumatique pour véhicule à roues, notamment tout terrain.

On connaît des suspensions dans lesquelles la roue est portée par le corps d'un vérin monté coulissant sur une tige fixée au châssis du véhicule, et par un triangle articulé au châssis et au corps du vérin (par exemple suspension type Mac Pherson). Avec une suspension de ce type, comme du reste avec d'autres suspensions connues, la roue associée à l'élément de suspension est amenée, durant ses oscillations verticales, à tourner, de plus, de part et d'autre de ce plan, de sorte que le guidage de cette roue est insuffisant. D'autre part, l'encombrement des parties basses, notamment du triangle, limite la garde au sol.

On connaît également, par le DE-A-2629518, une suspension hydropneumatique conforme au préambule de la revendication 1.

L'invention a pour but de remédier aux inconvénients exposés ci-dessus.

Suivant l'invention, l'élément de suspension est conforme à la partie caractérisante de la revendication 1.

Suivant un mode de réalisation de l'invention, dans lequel chaque vérin comporte une tige traversant un cylindre et contenant un accumulateur pneumatique, les deux cylindres sont montés coulissants sur les tiges et rigidement liés par une plaque sur laquelle est montée la roue, les tiges étant fixées au châssis.

Dans ces conditions, la solidarisation mécanique de la roue avec la plaque et les cylindres coulissants empêche toute possibilité de basculement de la roue de part et d'autre du plan vertical dans lequel elle effectue des oscillations. L'agencement selon l'invention améliore donc considérablement le guidage des roues du véhicule équipées de tels éléments de suspension, ainsi que la garde au sol, grâce à la réduction de l'encombrement en partie basse de cette suspension.

Suivant une particularité de l'invention, la plaque a une largeur suffisante et est percée pour laisser passer une transmission et/ou un axe de direction de la roue. Cette dernière peut donc être rendue motrice et/ou directrice, beaucoup plus aisément que les roues associées aux suspensions du type rappelé ci-dessus.

D'autres particularités et avantages de l'invention apparaitront au cours de la description qui va suivre, faite en référence aux dessins annexés qui en illustrent deux formes de réalisation à titre d'exemples non limitatifs :

— la Figure 1 est une vue en élévation latérale d'une première forme de réalisation de l'élément de suspension hydropneumatique selon l'invention ;

— la Figure 2 est une vue en élévation en bout d'un véhicule équipé d'éléments de suspension selon la figure 1 ;

— la Figure 3 est une vue en coupe axiale verticale d'un des vérins hydropneumatiques de l'élément de suspension des Figures 1 et 2 ;

— la Figure 4 est une vue analogue à la Figure 1 d'une seconde forme de réalisation de l'invention ;

— la Figure 5 est une vue en élévation en bout de l'élément de suspension et de la roue associée de la Figure 4, dans une direction perpendiculaire au plane de cette Figure ;

— la Figure 6 est une vue de détail illustrant une variante de l'accumulateur du vérin hydropneumatique de la Figure 3 ;

— la Figure 7 est une vue en coupe axiale d'un mode de réalisation industrielle correspondant à une variante du vérin de la Figure 3.

L'élément de suspension représenté aux dessins comprend deux vérins hydropneumatiques comportant chacun un premier organe adapté pour être fixé au châssis 7 du véhicule, et un second organe monté coulissant sur le premier organe, les deux seconds organes coulissants étant rigidement liés ensemble et mécaniquement solidarisés avec la roue correspondante 1.

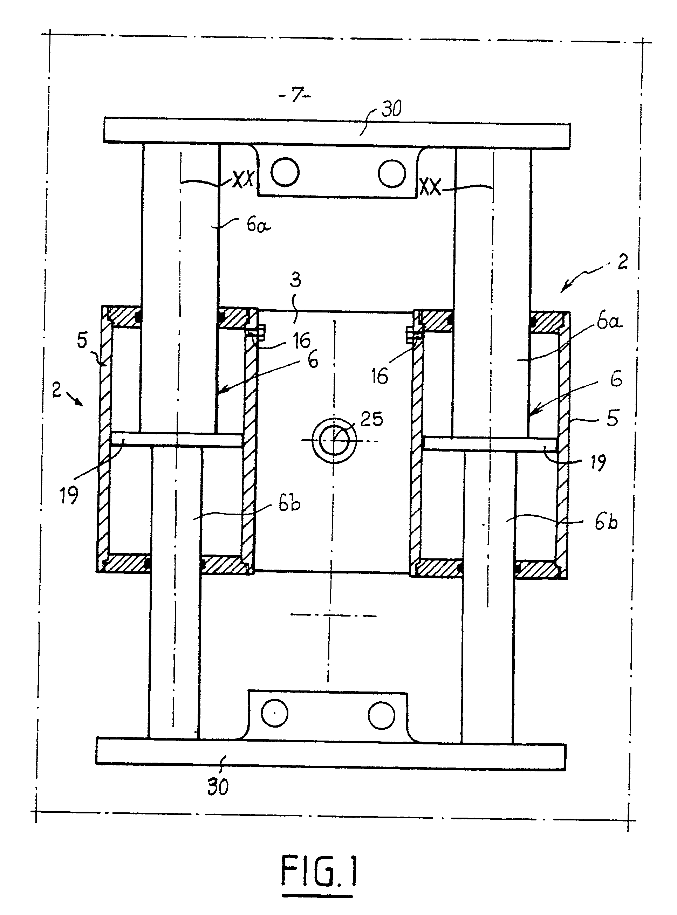

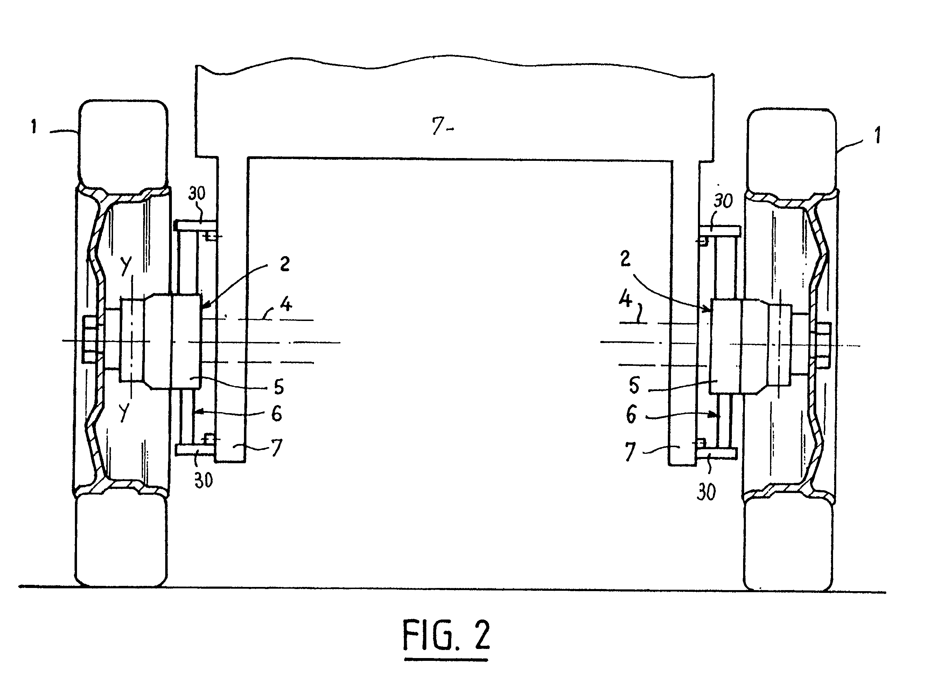

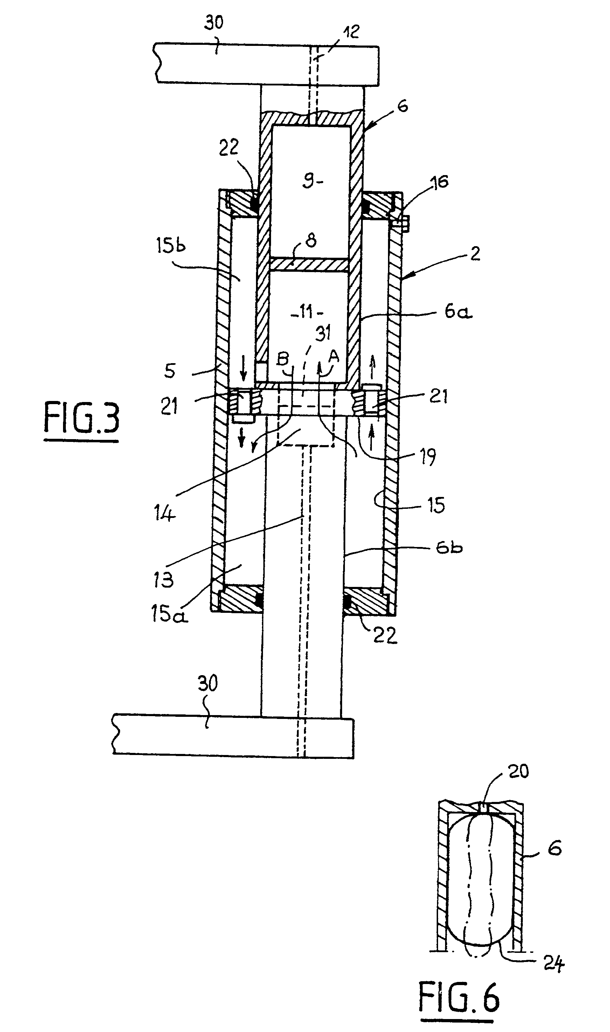

Dans la première forme de réalisation illustrée aux Figures 1 à 3, le premier organe précité de chaque vérin 2 est une tige 6 d'axe X-X vertical et qui traverse axialement un cylindre 5 constituant ledit second organe, chaque cylindre 5 étant donc monté coulissant sur la tige associée 6. Les deux tiges 6 sont reliées à leurs extrémités par des entretoises 30 fixées au châssis 7, par exemple par boulonnage. Chaque tige 6 est constituée de deux parties 6a, 6b de diamètres différents, le diamètre de la partie supérieure 6a étant supérieur à celui de la partie inférieure 6b. Chaque partie supérieure 6a est creuse et comporte une chambre longitudinale divisée par un piston 8 librement coulissant en deux compartiments 9, 11, respectivement remplis de gaz et d'un liquide hydraulique (par exemple azote et huile) formant un accumulateur hydropneumatique.

Le compartiment 9 peut être rempli de gaz par une canalisation 12 ménagée dans l'extrémité de la partie 6a et dans l'entretoise 30. Le compartiment d'huile 11 peut être rempli de liquide par un conduit axial 13 ménagé dans la partie 6b de la tige 6. Un amortisseur 31 et un clapet d'écrétage 14 sont disposés dans la tige 6 à la jonction des parties 6a et 6b, entre l'extrémité du conduit 13 et le compartiment 11. Le liquide peut circuler entre ce dernier et une chambre intérieure 15 du corps 5 suivant des trajets A et B schématiquement représentés. Le clapet d'écrétage 14 est réalisé de façon connue en soi, par exemple avantageusement conformément à la demande de brevet français FR-A-2609130 de la Demanderesse. L'amortisseur 31 peut également être réalisé de manière connue, par exemple selon la demande de brevet français FR-A-2609131 de la Demanderesse.

Au niveau de la jonction des parties 6a et 6b, la tige 6 est munie d'un piston 19 traversé par l'amortisseur 31 et par le clapet d'écrétage 14.

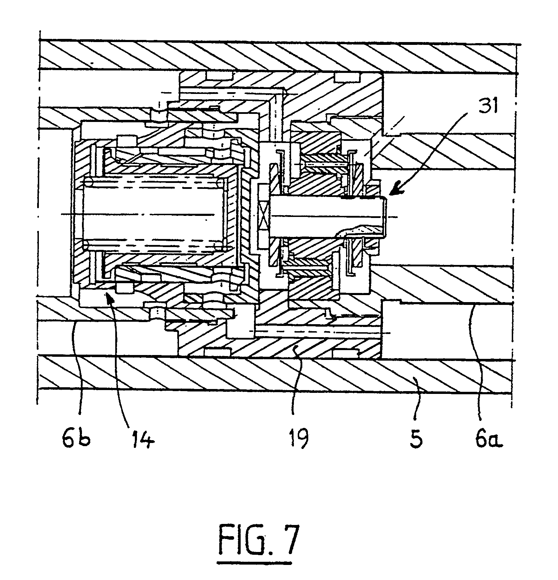

On voit à la Figure 7 un exemple de réalisation de l'amortisseur 31 du clapet 14 et des orifices de circulation d'huile dans le piston 19 conformes aux deux brevets précités. Les contenus de ces brevets sont incorporés par référence à la présente description, de sorte qu'une description détaillée de la Figure 7 n'est pas nécessaire.

Les extrémités du corps 5, constituées par des embouts vissés, sont percées d'ouvertures de passage étanches de la tige 6, grâce à des joints d'étanchéité 22.

Le piston 8 peut être remplacé en variante par une vessie 24 (Figure 6) munie d'une valve 20. De même, au lieu de l'amortisseur 31, on peut utiliser, pour l'amortissement, des ajutages 21 percés dans le piston 19. Dans les deux cas, les moyens d'amortissement permettent la circulation de l'huile entre les compartiments 15a et 15b de la chambre 15.

La plaque 3 peut être percée d'une ouverture centrale 25 de passage d'une transmission 4 éventuellement complétée par un axe de direction 4a. La roue 1 peut ainsi être rendue motrice et/ou directrice autour de l'axe Y-Y, l'axe de direction pouvant être prévu sans transmission. Le corps 5 peut être muni, si nécessaire, d'un caloduc pour l'évacuation de la chaleur dégagée par les oscillations de l'élément de suspension, ce caloduc pouvant être par exemple du type de celui décrit dans le brevet français FR-A-2556804 de la Demanderesse.

Des fonctions complémentaires peuvent être adjointes à cet élément de suspension, grâce à des dispositifs extérieurs non représentés, dont le liquide hydropneumatique communique avec l'élément 2, soit par la canalisation 13, soit par un orifice 16 de purge percé dans la paroi du corps 5. Il est ainsi possible de raccorder l'élément 2 à un connecteur de garde au sol tel que par exemple celui décrit dans le brevet français FR-A-2579936 au nom de la Demanderesse.

Le fonctionnement de l'élément de suspension 2 découle de la description qui précède : lorsqu'une roue 1 associée à un élément de suspension 2 passe sur une bosse ou sur un creux du terrain, l'ensemble solidaire de cette roue, formé par la plaque 3 et le corps 5, coulisse sur les tiges 6 et le liquide passe de l'un à l'autre des compartiments 15a et 15b, soit par les ajutages d'amortissement 21, soit par l'amortisseur 31 selon la réalisation mise en oeuvre. Le clapet d'écrétage 14 absorbe la fraction de liquide quine peut passer par l'amortisseur 31 ou par les ajutages 21. La fonction ressort est assurée par les variations de volume du liquide dans le corps 5 du vérin, dûe à la différence des sections des parties 6a et 6b de la tige 6, cette variation de volume comprimant ou détendant le gaz contenu dans la chambre 9.

Les avantages de l'élément de suspension selon l'invention sont les suivants : le montage de la roue 1 sur la plaque 3 solidaire en translation verticale des corps 5 maintient la roue 1 dans un plan d'oscillation vertical fixe, en l'empêchant de basculer de part et d'autre de ce plan. Le montage selon l'invention assure donc un excellent guidage de la roue.

De plus, l'élément de suspension 2, contrairement aux éléments de suspension antérieurs connus, peut être "plaqué" contre la roue 1 en étant presque intégré à celle-ci, en libérant donc un volume appréciable au niveau du châssis, qui permet d'améliorer notablement la garde au sol du véhicule. L'invention permet également de rendre la roue motrice en faisant passer la transmission 4 entre les deux vérins 2.

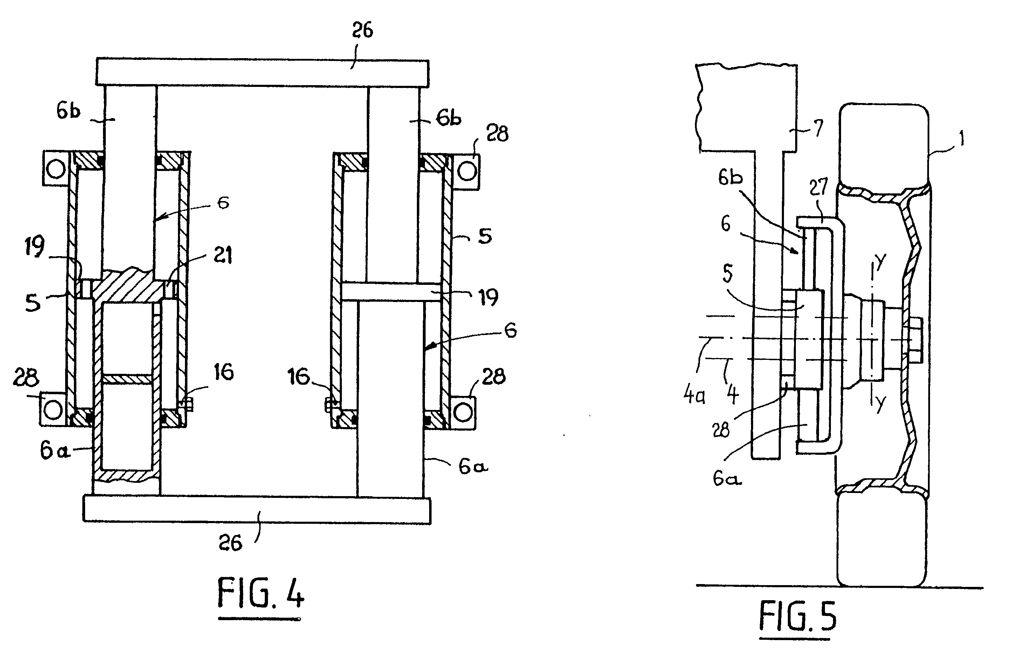

Dans le second mode de réalisation, illustré aux figures 4 et 5, les deux cylindres 5 sont fixés au châssis 7, par exemple par des pattes 28, et les deux tiges 6 sont montées coulissantes axialement dans les cylindres 5, leurs extrémités opposées étant rigidement liées par des entretoises 26. La roue 1 est solidarisée en translation verticale avec l'ensemble des deux tiges 6 et de leurs entretoises de liaison 26 par l'intermédiaire d'une pièce 27 dont les extrémités sont fixées aux entretoises 26. La roue 1 peut être associée à une transmission 4 passant entre les deux corps 5, dont l'écartement est prévu suffisant à cet effet, et traversant la pièce 27. De même que dans la réalisation précédente, la roue 1 peut également être rendue directrice.

L'élément de suspension des Figures 4 et 5 fonctionne de la même manière que celui des Figures 1 à 3 et présente les mêmes avantages techniques.

En variante, il est possible de prolonger vers le bas la plaque 3 sur une certaine hauteur et d'articuler la roue à la partie inférieure de cette plaque, ce qui dégage encore la garde au sol du véhicule.

## Revendications

1. Elément de suspension hydropneumatique pour véhicule à roues, comprenant deux vérins hydropneumatiques (2) adaptés pour être fixés au châssis (7) et pour être mécaniquement solidarisés avec la roue correspondante (1), caractérisé en ce que chaque vérin hydropneumatique (2) comporte un premier organe (6 ou 5) adapté pour être fixé au châssis (7) du véhicule, et un second organe (5 ou 6) monté coulissant sur le premier organe, et les deux seconds organes coulissants (5 ou 6) sont rigidement liés ensemble et mécaniquement solidarisés avec la roue correspondante (1).

2. Elément selon la revendication 1, caractérisé en ce que, chaque vérin comportant une tige (6) traversant un cylindre (5) et contenant un accumulateur hydropneumatique (9, 11), les deux cylindres (5) sont montés coulissants sur les tiges (6) et rigidement liés par une plaque (3) sur laquelle est montée la roue (11), les tiges (6) étant fixées au châssis (7).

3. Elément selon la revendication 2, caractérisé en ce que la plaque (3) a une largeur suffisante et est percée pour laisser passer une transmission (4) de la roue (1).

4. Elément selon la revendication 1, caractérisé en ce que, chaque vérin (2) comportant une tige (6) traversant un cylindre (5) et contenant un accumulateur hydropneumatique (9, 11), les deux cylindres (5) sont fixés au châssis (7), les deux tiges sont montées coulissantes dans les cylindres et rigidement liées par leurs extrémités, par exemple au moyen d'entretoises (26).

5. Elément selon la revendication 4, caractérisé en ce que les cylindres (5) sont écartés l'un de l'autre d'une largeur suffisante pour laisser passer entre eux une transmission (4) de la roue (1), laquelle est mécaniquement liée aux deux tiges coulissantes (6).

## Patentansprüche

1. Hydropneumatisches Radaufhängungselement für ein Radfahrzeug, bestehend aus zwei hydropneumatischen Kolben-Zylinder-Einheiten (2), die zur Befestigung am Fahrgestell (7) und zur mechanischen festen Verbindung mit dem entsprechenden Rad (1) ausgebildet sind, dadurch gekennzeichnet, daß jede hydropneumatische Kolben-Zylinder-Einheit (2) ein erstes Organ (6 oder 5), das zur Befestigung am Fahrgestell (7) des Fahrzeugs ausgebildet ist, und ein auf dem ersten Organ verschiebbar montiertes zweites Organ (5 oder 6) besitzt und daß die beiden verschiebbaren zweiten Organe (5 oder 6) miteinander starr verbunden sind und mit dem entsprechenden Rad (1) mechanisch fest verbunden sind.

2. Element nach Anspruch 1, dadurch gekennzeichnet, daß im Fall von Kolben-Zylinder-Einheiten, deren jede eine Stange (6) besitzt, die einen Zylinder (5) durchquert und einen hydropneumatischen Speicher (9, 11) enthält, die beiden Zylinder (5) auf den Stangen (6) verschiebbar montiert und durch eine Platte (3), auf der das Rad (11) montiert ist, starr verbunden sind, wobei die Stangen (6) am Fahrgestell (7) befestigt sind.

3. Element nach Anspruch 2, dadurch gekennzeichnet, daß die Platte (3) eine ausreichende Breite hat und durchbohrt ist, um einen Antrieb (4) für das Rad (1) hindurchtreten zu lassen.

4. Element nach Anspruch 1, dadurch gekennzeichnet, daß im Fall von Kolben-Zylinder-Einheiten (2), deren jede eine Stange (6) besitzt, die einen Zylinder (5) durchquert und einen hydropneumatischen Speicher (9, 11) enthält, die beiden Zylinder (5) am Fahrgestell (7) befestigt sind und die beiden Stangen in den Zylindern verschiebbar montiert sind und an ihren Enden beispielsweise durch Stege (26) starr verbunden sind.

5. Element nach Anspruch 4, dadurch gekennzeichnet, daß die Zylinder (5) voneinander um eine ausreichende Breite entfernt sind, um zwischen sich einen Antrieb (4) für das Rad (1) hindurchtreten zu lassen, das mechanisch mit den beiden verschiebbaren Stangen (6) verbunden ist.

## Claims

1. Hydropneumatic suspension unit for a wheeled vehicle, comprising two hydropneumatic jacks (2) adapted to be fixed to the chassis (7) and to be mechanically fixed to the corresponding wheel (1), characterised in that each hydropneumatic jack (2) has a first member (6 or 5) adapted to be fixed to the chassis (7) of the vehicle and a second member (5 or 6) slidably mounted on the first member, and the two second sliding members (5 or 6) are rigidly connected together and mechanically fixed to the corresponding wheel (1).

2. Unit according to claim 1, characterised in that, each jack having a rod (6) passing through a cylinder (5) and containing a hydropneumatic accumulator (9, 11), the two cylinders (5) are slidably mounted on the rods (6) and rigidly connected by a plate (3) on which the wheel (1) is mounted, the rods (6) being fixed to the chassis (7).

3. Unit according to claim 2, characterised in that the plate (3) has a sufficient width and is bored to allow the passage of a transmission shaft (4) for the wheel (1).

4. Unit according to claim 1, characterised in that, each jack (2) having a rod (6) passing through a cylinder (5) and containing a hydropneumatic accumulator (9, 11), the two cylinders (5) are fixed to the chassis (7), the two rods are mounted slidably in the cylinders and rigidly connected by their ends, for example by means of braces (26).

5. Unit according to claim 4, characterised in that the cylinders (5) are spaced apart by a width sufficient to allow the passage between them of a transmission shaft (4) for the wheel (1), which is mechanically connected to the two sliding rods (6).

-7-

30

XX    XX

6a

3

2

5

16    6

16

2

6a

6

5

25

19

19

6b

6b

FIG.1

30

5

FIG. 2

FIG.3

FIG.6

FIG.5

FIG.4

8

FIG. 7